# EUROPÄISCHE PATENTSCHRIFT

(11) **EP 2 712 691 B1**
(45) Veröffentlichungstag und Bekanntmachung des Hinweises auf die Patenterteilung: **11.03.2015**
(21) Anmeldenummer: 13186299.7
(22) Anmeldetag: 27.09.2013
(51) Int. Cl.: B22D 11/124, B05B 7/12, B05B 7/04, G05D 11/00

(54) **Vorrichtung und Verfahren zur Sekundarkühlung in einer Gießanlage**
Device and method for secondary cooling in a casting machine
Dispositif et procédé de refroidissement secondaire dans une installation de coulée

(30) Priorität: 27.09.2012 DE 102012018989
(43) Veröffentlichungstag der Anmeldung: 02.04.2014
(73) Patentinhaber: SMS Siemag AG, 40237 Düsseldorf (DE)
(72) Erfinder: Friedrich, Jürgen, 45481 Mülheim a. d. R. (DE); Hüllen, Ina, 40625 Düsseldorf (DE); Gabor, Pawel, 41470 Neuss (DE)
(74) Vertreter: Klüppel, Walter

(56) Entgegenhaltungen:
- EP-A1- 0 576 817
- DE-U1- 20 112 812
- US-A- 2 682 883

## Beschreibung

### 1. Gebiet der Erfindung

Die vorliegende Erfindung ist auf eine Vorrichtung und ein Verfahren zur Sekundärkühlung in einer Gießanlage, insbesondere in einer Stranggießanlage gerichtet. Es erfolgt eine Zweistoffkühlung, wie etwa mit Luft und Wasser.

### 2. Stand der Technik

In heutigen Stranggießanlagen zum Gießen von Metallsträngen wird die Sekundärkühlung bevorzugt mit einem Zweistoff-Kühlsystem mit einem Gemisch aus Luft und Wasser betrieben. Die Sekundärkühlung ist häufig in Gießrichtung in Spritzzonen und über die Anlagenbreite in Regelkreise unterteilt. Für alle Regelkreise werden Wasserwerte dabei zum Beispiel in Abhängigkeit von Gießgeschwindigkeit, Stahlgüte, Überhitzung und Gießbreite vorgegeben. Der Luftverbrauch resultiert aus den Sollwertvorgaben des Luftdrucks. Die Luftdrucksollwerte sind in der Regel vom Wasservolumenstrom eines entsprechenden Regelkreises abhängig, wobei bei kleiner werdender Wassermenge der Luftverbrauch steigt.

Solch ein Kühlkonzept erfordert sowohl einen hohen Instrumentierungs- als auch Regelungsaufwand. Diese Art der Regelung ist daher teuer. Optimal aus Sicht der Nachhaltigkeit und Wirtschaftlichkeit ist es, wenn je Wasserregelkreis ein Luftregelkreis zur Vorgabe der prozessrelevanten Sollwerte eingeplant wird. Die Umsetzung einer solchen Lösung ist allerdings zum Beispiel aus Platzgründen (großer Platzbedarf auf dem Segment und den Wasserspannplatten) nur bedingt möglich. In solchen Fällen kann zwar ein vereinfachtes Konzept angewandt werden, jedoch führen dann mögliche Betriebszustände zu einem erhöhten

Luftverbrauch, welcher sich aus einem Betrieb mit geringem Wasserdruck ergeben kann. Obwohl diese Lösungen zwar verfahrenstechnisch korrekt sein können, sind sie verbesserungswürdig in Bezug auf die Energieeffizienz und Wirtschaftlichkeit.

EP 0576 817 A1 offenbart ein Verfahren zur Zufuhr von Gas und Flüssigkeit zu einer Zweistoffdüse, in denen der Druck in der Zuführung eines der beiden Fluide gemessen und als Maß für die Steuerung des Volumenstroms in der Zuführung des anderen Fluides dient. Dabei findet eine Ventil Verwendung, welches mit zwei Membranen gekoppelt ist Die Konstruktion dieses Ventils ist allerdings relativ aufwendig.

Die WO 2009/090000 A1 offenbart ein Verfahren zur Sekundärkühlung von Gießsträngen mit einem Wasser-Luft-Gemisch in Abhängigkeit von Prozessparametern, wie beispielsweise Gießgeschwindigkeit, Stahlqualität oder Formatbreite. Insbesondere erfolgt dabei eine Regelung mittels eines Prozessrechners.

Des Weiteren ist in der US 2 682 883 A ein Dosierer zum Zudosieren von Additiven zu einem Hauptfluidstrom beschrieben, bei welchem die Zufuhr der Additive mittels eines Schiebekolbens eingestellt werden kann, indem der Hauptfluidstrom durch den Schiebekolben hindurch geleitet wird. Hierbei wird der in einer Kammer angeordnete Schiebekolben durch Aktivierung des Hauptfluidstroms längsverschieblich in der Kammer verlagert, dass er eine Öffnung der Zufuhr freigibt.

Ferner ist aus der DE 201 12 812 U1 ein Zerstäuber mit einem Schließkörper bekannt, bei welchem der Schließkörper in einem länglich ausgebildeten Zylinder in Längserstreckung des Zylinders verschieblich gelagert ist. Hierbei sind Zuleitungen zu dem Zylinder derart an der Zylinderwand angebracht, dass zumindest eine Öffnung von einer der Zuleitungen durch den Schließkörper von außerhalb der entsprechenden Zuleitung verschlossen bzw. geöffnet werden kann, wenn der Schließkörper längsverschieblich in dem Zylinder verlagert wird.

### 3. Aufgabe der Erfindung

Ziel der Erfindung ist es den Regelungsaufwand für Gießanalagen mit Mehrstoffkühlung, insbesondere Zweistoffkühlung zu reduzieren. Ein weiteres Ziel kann die Reduzierung des Verrohrungsaufwandes (Streckenverrohrung bzw. Segmentverrohrung) sein. Ferner soll der Kühlmittelverbrauch eines der Kühlmittel reduziert werden, wie zum Beispiel der Luftverbrauch im Falle einer Luft-Wasser-Kühlung. Schließlich sollte die Konstruktion einer entsprechenden Vorrichtung möglichst einfach und kostengünstig gehalten sein.

### 4. Zusammenfassung der Erfindung

Die obengenannten Ziele werden durch die Merkmale des Anspruchs 1 erreicht.

Erfindungsgemäß umfasst eine Zweistoffkühl-Vorrichtung, insbesondere eine Düse, zur Mehrstoffkühlung in einer Gießanlage einen ersten Einlass für ein erstes Kühlmittel, einen zweiten Einlass für ein zweites Kühlmittel sowie eine Mischkammer oder einen Mischbereich zum Vermischen der durch den ersten Einlass und den zweiten Einlass eingeleiteten Kühlmittel zu einem Kühlmittelgemisch, wobei der erste Einlass über einen ersten Kanal mit der Mischkammer verbunden ist und der zweite Einlass über einen zweiten Kanal mit der Mischkammer verbunden ist. Ferner umfasst die Zweistoffkühl-Vorrichtung einen sich quer durch den ersten Kanal hindurch erstreckenden, federbelasteten Schieber zum Einstellen des Kühlmittelstroms durch den ersten Kanal, der in einer offenen Stellung die Zuführung des ersten Kühlmittels von dem ersten Einlass in die Mischkammer erlaubt und in einer geschlossenen Stellung die Zuführung des ersten Kühlmittels von dem ersten Einlass in die Mischkammer gegenüber der offenen Stellung zumindest reduziert oder vorzugsweise vollständig blockiert. Dabei sind die Vorrichtung und insbesondere der Schieber derart ausgebildet, dass die Verstellung des Schiebers in einem sich zumindest teilweise quer und beidseitig durch den ersten Kanal erstreckenden dritten Kanal zwischen der offenen Stellung und der geschlossenen Stellung in Abhängigkeit eines von dem zweiten Kühlmittel auf den Schieber wirkenden Drucks erfolgt, indem der Schieber entlang des dritten Kanals beweglich und durch diesen geführt ist. Dabei wirkt der Druck des zweiten Kühlmittels vorzugsweise unmittelbar auf den Schieber, das heißt, das zweite Kühlmittel, falls vorhanden, kontaktiert den Schieber.

Die vorgeschlagene Zweistoffkühl-Vorrichtung stellt eine konstruktiv relativ einfache und kostengünstige Lösung dar. Insbesondere wird nur eine relativ geringe Anzahl an Bauteilen benötigt, um eine sparsame Regelung zu ermöglichen. Ferner ermöglicht die vorgeschlagene Lösung gegenüber einigen aus dem Stand der Technik bekannten Vorrichtungen eine Reduzierung des Luftverbrauchs, im Falle einer verringerten oder abgeschalteten Kühlung durch das zweite Kühlmittel.

In einer bevorzugten Ausführungsform sind das erste Kühlmittel Luft und das zweite Kühlmittel Wasser.

In einer weiteren bevorzugten Ausführungsform befindet sich der Schieber bei Einströmen des zweiten Kühlmittels durch den zweiten Einlass in der offenen Stellung und bei Ausbleiben des Einströmens des zweiten Kühlmittels durch den zweiten Einlass in der geschlossenen Stellung.

In einer weiteren bevorzugten Ausführungsform ist die Zweistoffkühl-Vorrichtung eine Düse. der erste Einlass über einen ersten Kanal und der zweite Einlass über einen zweiten Kanal mit der Mischkammer verbunden, wobei sich der Schieber zum Einstellen des Kühlmittelstroms durch den ersten Kanal quer durch den ersten Kanal erstreckt.

Insbesondere kann der Schieber in einer Bohrung oder einem weiteren Kanal angeordnet sein, welcher einen Querschnitt aufweist, der mindestens gleich groß wie der Querschnitt des ersten Kanals ist. Dabei kann der Schieber zumindest abschnittsweise einen Querschnitt aufweisen, welcher komplementär zu dem Querschnitt der Bohrung oder des weiteren Kanals ist.

In einer weiteren bevorzugten Ausführungsform, umfasst die Vorrichtung somit einen dritten Kanal, welcher sich, zumindest teilweise, quer und beidseitig durch den ersten Kanal erstreckt, wobei der Schieber in dem dritten Kanal angeordnet, entlang dieses dritten Kanals beweglich und durch diesen geführt ist.

In einer weiteren bevorzugten Ausführungsform steht der dritte Kanal in fluider Verbindung mit dem zweiten Kanal, sodass ein Kühlmitteldruck des zweiten Kühlmittels unmittelbar auf den im dritten Kanal beweglich geführten Schieber wirkt.

In einer weiteren bevorzugten Ausführungsform ist der Schieber zumindest abschnittsweise entlang einer Innenwandung des dritten Kanals abgedichtet geführt. Zu diesem Zweck kann der Schieber auch ein oder mehrere Dichtelemente umfassen, wie zum Beispiel Ringdichtungen, welche in entsprechenden Nuten des Schiebers angeordnet sein kann und einen Bereich zwischen dem Schieber und der Innenwandung des dritten Kanals abdichten.

In einer weiteren bevorzugten Ausführungsform weist der Schieber einen ersten Bereich auf, welcher in der offenen Stellung einen Durchfluss durch den ersten Kanal von dem ersten Einlass in die Mischkammer erlaubt, und einen zweiten Bereich, welcher in der geschlossenen Stellung diesen Durchfluss gegenüber der offenen Stellung reduziert oder vollständig blockiert. Dabei kann der zweite Bereich zum Beispiel durch einen Materialblock gebildet sein, welcher den

Querschnitt des ersten Kanals in der geschlossenen Stellung vollständig blockiert. Alternativ, kann der zweite Bereich eine oder mehrere (durchgehende) Öffnungen oder Rillen aufweisen, welche einen Strom durch den zweiten Bereich hindurch ermöglichen.

In einer weiteren bevorzugten Ausführungsform weist der Schieber einen dritten Bereich auf, wobei der erste Bereich zwischen dem zweiten und dem dritten Bereich angeordnet ist. Dabei können sowohl der zweite Bereich als auch der dritte Bereich im Wesentlichen komplementär zu einem inneren Querschnitt des dritten Kanals ausgebildet sein, sodass der zweite Bereich und der dritte Bereich den dritten Kanal gegenüber Kühlmittelfluss abdichten. Dies kann, wie bereits beschrieben, zum Beispiel mittels entsprechender Dichtelemente erreicht werden. Solche Elemente an sich sind dem Fachmann bekannt.

In einer weiteren bevorzugten Ausführungsform weist der erste Bereich einen gegenüber dem zweiten Bereich und/oder dem dritten Bereich geringeren Querschnitt und/oder zumindest eine durchgehende Öffnung oder Rille zum Leiten von Kühlmittel durch den ersten Bereich des Schiebers auf. Somit kann in der offenen Stellung Kühlmittel durch den ersten Bereich des Schiebers gelangen.

Im Allgemeinen können die Öffnungen oder Rillen einen Fluss des ersten Kühlmittels quer durch den Schieber bzw. quer zu dessen Bewegungs-/Verstellrichtung erlauben.

In einer weiteren bevorzugten Ausführungsform weist der zweite Bereich des Schiebers eine Öffnung oder Rille zum Leiten von Kühlmittel durch den zweiten Bereich des Schiebers und zum Ermöglichen eines Restkühlmittelstroms des ersten Kühlmittels durch den Schieber bei geschlossener Stellung des Schiebers auf. Dieser verbleibende Strom, insbesondere Luftstrom, kann zum Beispiel zur

Kühlung der Vorrichtung dienen. Das Vorsehen eines solchen Bypasses direkt im Schieber ermöglicht eine besonders kompakte Bauweise.

In einer weiteren bevorzugten Ausführungsform weist der Schieber eine längliche Form mit zwei gegenüberliegenden Enden auf. Diese Enden können durch die obengenannten zweiten und dritten Bereiche gebildet sein. Ferner ist der Schieber entlang seiner Längsachse beweglich angeordnet und das zweite Kühlmittel - falls vorhanden - steht mit einem ersten der beiden Enden in Verbindung, sodass der Druck des zweiten Kühlmittels (unmittelbar) auf dieses Ende wirkt.

In einer weiteren bevorzugten Ausführungsform ist das zweite der beiden gegenüberliegenden Enden über ein Federelement entgegen dem auf das erste der beiden Enden wirkenden Druck des zweiten Kühlmittels vorgespannt. Zusätzlich oder alternativ ist das erste der beiden Enden über ein Zugkraft-Federelement entgegen dem auf das erste der beiden Enden wirkenden Druck des zweiten Kühlmittels vorgespannt. Ferner ist das zweite der beiden gegenüberliegenden Enden zusätzlich oder alternativ mittels eines Gasreservoirs, zum Beispiel Luft, entgegen dem auf das erste der beiden Enden wirkenden Druck des zweiten Kühlmittels vorgespannt. Dabei kann der dritte Kanal ein geschlossenes Ende aufweisen, in dem das Gas bzw. die Luft mittels des Schiebers eingeschlossen ist.

Insbesondere soll in der vorliegenden Anmeldung das Merkmal einer Federbelastung dahingehend verstanden werden, dass darunter sowohl Zug- als auch Druckbelastungen fallen. Ferner schränkt das Wort Federbelastung den Gegenstand der Anmeldung nicht ausschließlich auf das strukturelle Element einer Feder ein. Vielmehr fallen unter diesen Begriff auch andere Elemente, welche eine Federbelastung bereitstellen, wie zum Beispiel eine Federung durch ein Luftpolster.

In einer weiteren bevorzugten Ausführungsform umfasst die Vorrichtung einen Düsenauslass und ein Düsenrohr, welches den Düsenauslass mit der Mischkammer zur Leitung des Kühlmittelgemischs zum Düsenauslass verbindet.

In einer weiteren Ausführungsform hat der federbelastete Schieber und/oder die Vorrichtung keine elektrische Versorgung bzw. ist frei von einer solchen. Hierdurch wird nicht nur der Aufwand an Leitung und Ansteuerung verringert, sondern der Einsatz des Bauteils in thermisch hochbelasteten Teilen der Gießanlage ermöglicht.

In einer weiteren Ausführungsform sind der belastete Schieber und die Mischkammer als integrierte bauliche Einheit ausgebildet. Hierdurch lässt sich eine erfindungsgemäße Vorrichtung kompakt, kostengünstig und gegen die Umgebungsbedingungen unempfindlich ausbilden.

Ferner richtet sich die vorliegende Erfindung ebenfalls auf eine Anlage zur Sekundärkühlung in einer Gießanlage mit einer Vorrichtung gemäß einer der beschriebenen Ausführungsformen.

Die Erfindung kann sich ebenfalls auf ein Walzwerk, welches eine Metallgießanlage umfasst, richten, insbesondere eine Stranggießanlage und eine Anlage zur Sekundärkühlung eines mit der Gießanlage gegossenen Metallstrangs.

Schließlich betrifft die Erfindung ein Verfahren zur Sekundärkühlung in einer Gießanlage, bevorzugt mittels der vorbeschriebenen Vorrichtung oder Anlage. Das Verfahren umfasst dabei einen oder mehrere der folgenden Schritte: Bereitstellen eines Stroms eines ersten Kühlmittels; Bereitstellen eines Stroms eines zweiten Kühlmittels; Führen der beiden Ströme in einen Mischbereich zum Durchmischen beider Kühlmittel zu einem Kühlmittelgemisch; Verströmen des Kühlmittelgemischs auf die Oberfläche eines in der Gießanlage gegossenen

Metallstrangs; und Beaufschlagen eines federbelasteten Schiebers mit dem zweiten Kühlmittel zur Einstellung des Stroms des ersten Kühlmittels durch einen Druck des zweiten Kühlmittels, wobei, bei sinkendem Druck des zweiten Kühlmittels, der Schieber den Strom des ersten Kühlmittels in den Mischbereich reduziert oder vorzugsweise vollständig blockiert.

In einer bevorzugten Ausführungsform übt Druck des Stroms des zweiten Kühlmittels unmittelbar eine Kraft auf den Schieber, insbesondere auf ein Stirnende des Schiebers, aus, wobei diese Kraft den Schieber entgegen der Federbelastung in eine offene Stellung drängt bzw. entgegen der Federbelastung wirkt, um den Strom des ersten Kühlmittels in den Mischbereich zu ermöglichen und sich der Schieber bei Ausbleiben des Drucks des Stroms des zweiten Kühlmittels durch die Federbelastung in eine geschlossene Stellung bewegt und somit die Zufuhr des Stroms des ersten Kühlmittels in den Mischbereich unterbunden wird.

Sämtliche Merkmale der oben beschriebenen Ausführungsformen können miteinander kombiniert oder gegeneinander ausgetauscht werden.

### 5. Kurze Beschreibung der Figuren

Im Folgenden werden kurz die Figuren der Ausführungsbeispiele beschrieben. Weitere Details sind der detaillierten Beschreibung der Ausführungsbeispiele zu entnehmen. Es zeigen:
- Figur 1: eine Vorrichtung gemäß einem ersten bevorzugten Ausführungsbeispiel der Erfindung in einer ersten Stellung, in der ein Strömen von Kühlmittel in die Mischkammer sowohl von einem ersten als auch von einem zweiten Einlass ermöglicht wird;
- Figur 2: die Vorrichtung gemäß Figur 1, wobei sich die Vorrichtung in einer zweiten Stellung befindet, in der der Kühlmittelstrom eines Kühlmittels blockiert wird;
- Figur 3: eine Vorrichtung gemäß einem zweiten bevorzugten Ausführungsbeispiel der Erfindung in einer ersten Stellung, in der ein Strömen von Kühlmittel in die Mischkammer sowohl von einem ersten als auch von einem zweiten Einlass ermöglicht wird;
- Figur 4: die Vorrichtung gemäß Figur 3, wobei sich die Vorrichtung in einer zweiten Stellung befindet, in der der Kühlmittelstrom eines Kühlmittels blockiert wird;
- Figur 5: eine Vorrichtung gemäß einem dritten bevorzugten Ausführungsbeispiel der Erfindung in einer ersten Stellung, in der ein Strömen von Kühlmittel in die Mischkammer sowohl von einem ersten als auch von einem zweiten Einlass ermöglicht wird;
- Figur 6: die Vorrichtung gemäß Figur 5, wobei sich die Vorrichtung in einer zweiten Stellung befindet, in der der Kühlmittelstrom eines Kühlmittels blockiert wird.

### 6. Detaillierte Beschreibung der Ausführungsbeispiele

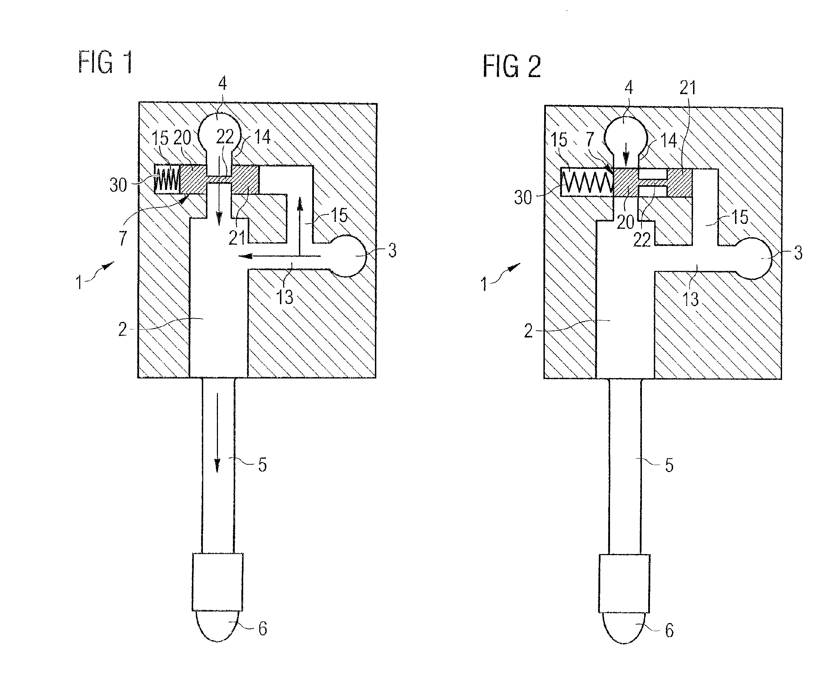

Die Figur 1 zeigt eine schematische Querschnittsansicht durch eine Vorrichtung 1 gemäß einem ersten bevorzugten Ausführungsbeispiel der vorliegenden Erfindung. Diese Vorrichtung ist im vorliegenden Ausführungsbeispiel eine Düse 1 mit einem ersten Einlass 4 für eine erstes Kühlmittel bzw. einen ersten Stoff und einem zweiten Einlass 3 für ein zweites Kühlmittel bzw. einem zweiten Stoff. Ferner umfasst die Düse 1 einen Düsenauslass 6 bzw. einen Düsenkopf 6 sowie ein Düsenrohr 5 zur Verbindung einer Mischkammer bzw. eines Mischbereichs 2 mit dem Düsenkopf 6 zur Verströmung eines Kühlmittelgemischs. Dabei können das erste Kühlmittel und das zweite Kühlmittel über Kanäle 14, 13 in die Mischkammer 2 gelangen, um dort miteinander vermischt zu werden. Die gezeigte Düse 1 ist somit eine Düse zur Zweistoffkühlung und kann zur Sekundärkühlung einer Stranggießanlage Verwendung finden.

Ferner umfasst die Düse 1 einen beweglichen Schieber 7, der in einem sich quer zu dem Kanal 14 erstreckenden weiteren Kanal 15 angeordnet ist. Ein Ende des Schiebers 7 steht dabei in Verbindung mit dem Druck des durch den Einlass 13 eingeleiteten Kühlmittels. Ein diesem Ende gegenüberliegendes, weiteres Ende des Schiebers 7 ist durch ein elastisches Element bzw. eine Feder 30 federbelastet bzw. vorgespannt. Daher wirkt auf ein Ende des Schiebers 7 die Kraft bzw. der Druck der Feder 30 und auf das andere Ende des Schieber 7 der Druck des durch den Einlass 3 einströmenden Kühlmittels, welches durch den Kanal 15 zu dem Schieber 7 gelangt.

Insbesondere kann der Schieber 7 drei Bereiche 20, 21, 22 umfassen, wobei die Bereiche 20 und 21 im Wesentlichen komplementär zum Innenquerschnitt des Kanals 15 ausgebildet sind, durch dessen Innenwandung der Schieber 7 geführt wird. In diesen Bereichen ist die Vorrichtung zwischen Schieber 7 und der Innenwandung des Kanals 15 bevorzugt abgedichtet. Der Bereich 22, welcher zwischen den beiden Bereichen 20 und 21 liegt, weist bevorzugt, wie in Figur 1 dargestellt, einen geringeren Querschnitt als die beiden Bereiche 20, 21 und der Kanal 15 auf.

Durch den geringeren Querschnitt des Bereichs 22 kann in der in der Figur 1 gezeigten offenen Stellung des Schiebers 7 Kühlmittel, zum Beispiel Luft, von dem Einlass 4 durch den Bereich 22 des Schiebers 7 und den Kanal 14 in die Mischkammer 2 strömen. Somit erreichen beide Kühlmittel die Mischkammer 2, werden in dieser vermischt und durch den Auslass 6 verströmt.

Die Figur 2 zeigt die Düse 1 gemäß der Figur 1, jedoch mit einer geschlossenen Stellung des Schiebers 7. Durch einen geringeren oder ausbleibenden Strom des Kühlmittels aus dem Einlass 3 (zum Beispiel Wasser) übertrifft die Federkraft des Federelements 30 die auf den ersten Bereich 21 des Schiebers 7 wirkende Kraft, sodass sich der Schieber 7 in Bezug auf die Figur 1 in dem Kanal 15 nach rechts bewegt hat und somit der Bereich 20 den Durchfluss durch den Kanal 14 in die Mischkammer 2 blockiert. Zu diesem Zweck weisen bevorzugt sowohl der Kanal 15 als auch der Bereich 20 einen größeren Querschnitt als der Kanal 14 auf. Mit anderen Worten versiegt im Falle der geschlossenen Stellung der Figur 2 der Volumenstrom aus dem Düsenauslass 6, wodurch die Vorrichtung eine erhöhte Wirtschaftlichkeit aufweist.

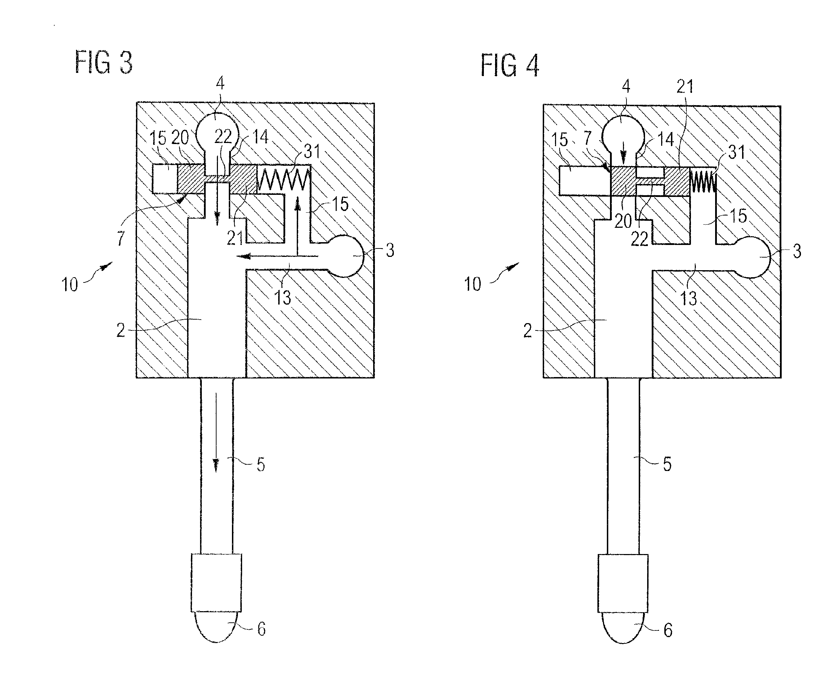

Die Figur 3 zeigt eine zur Düse 1 gemäß den Figuren 1 und 2 ähnliche Düse 10. Zur besseren Verständlichkeit der Anmeldung sind identische Elemente mit den gleichen Bezugszeichen dargestellt. Die Düse 10 umfasst somit dieselben Elemente wie die Düse 1 gemäß dem ersten Ausführungsbeispiel der Erfindung, jedoch nicht das Federelement 30 sondern ein Federelement 31. Im Gegensatz zum Federelement 30 ist das Federelement 31 ein Zugkraft-Federelement, welches den Schieber 7 in Richtung der Feder 31 zieht. Diese Feder 31 greift somit am selben Ende des Schiebers 7 an, auf das auch der Druck des durch den Einlass 3 einströmenden Kühlmittels wirkt.

Die Figur 3 zeigt ähnlich wie in der Figur 1 eine offene Stellung des Schiebers 7, wobei der Druck des durch den Einlass 3 einströmenden und mittels des Kanals 15 zu dem am Bereich 21 gelegenen Ende geleiteten Kühlmittels (zum Beispiel Wasser) der Federkraft des Federelements 31 entgegengesetzt ist.

In der Figur 4 ist eine offene Schieberstellung der Anordnung aus Figur 3 dargestellt. Wie im vorangehenden Ausführungsbeispiel blockiert der Bereich 20 des Schiebers 7 in dieser Stellung den Kanal 14, wodurch kein Kühlmittel aus dem Einlass 4 in die Mischkammer 2 gelangen kann.

Auch die in den Figuren 3 und 4 gezeigte Anordnung kann die Wirtschaftlichkeit einer Vorrichtung zur Sekundärkühlung erhöhen. Ferner lässt sich mit den gezeigten Anordnungen ein erheblich reduzierter Konstruktionsaufwand erreichen.

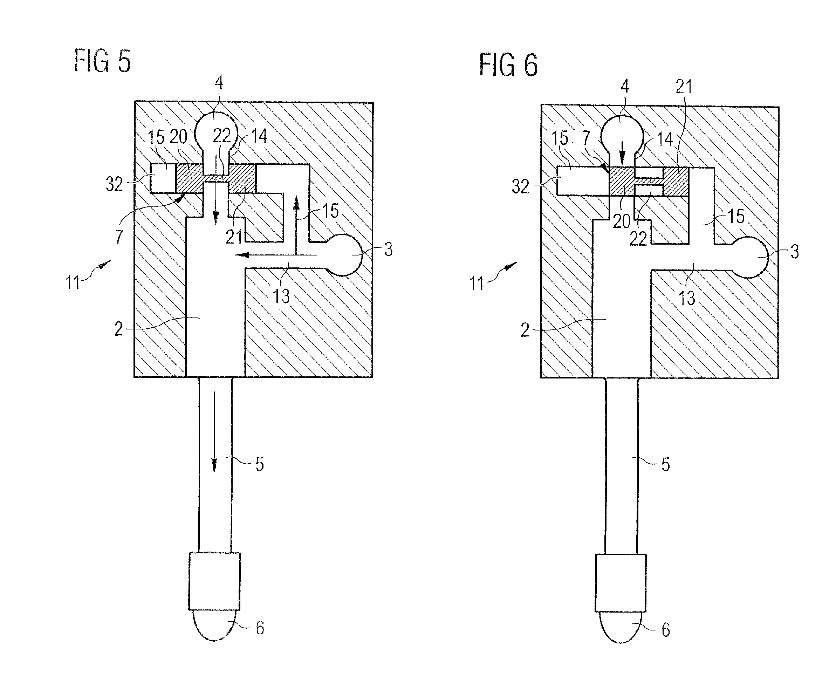

Die Figuren 5 und 6 zeigen eine Düse 11 gemäß einem dritten bevorzugten Ausführungsbeispiel der Erfindung. Wiederum wurden die Bezugszeichen aus den Figuren 1 bis 4 für gleiche Elemente beibehalten.

Im Gegensatz zu den beiden vorhergehenden Ausführungsbeispielen umfasst die Düse 11 kein Federelement 30, 31. Vielmehr wird ein Gasdruckreservoir 32 (zum Beispiel Luft oder Druckluft) verwendet um eine Federbelastung des Schieber 7 zu ermöglichen. Dieses Reservoir 32 ist auf einer Stirnseite des Schiebers 7 angeordnet, welche der Stirnseite des Schiebers 7 gegenüberliegt, auf die der Druck des durch den Einlass 3 einströmenden Kühlmittels wirkt. Mit anderen Worten, ist das Reservoir an einem Ende des Kanals 15 angeordnet bzw. wird durch ein Ende diese Kanals 15 gebildet. Dazu kann der Kanal 15 sacklochartig ausgebildet sein. Dies gilt im Übrigen auch für die vorhergehenden Ausführungsbeispiele. In den vorhergehenden Ausführungsbeispielen muss der Kanal 15 allerdings an diesem Ende nicht geschlossen sein, sondern kann eine Öffnung (nicht dargestellt) in Verbindung mit der Umgebung der Vorrichtung bzw. Düse aufweisen.

Mit Bezug auf die Figur 5 ist der Schieber wiederum in einer offenen Stellung gezeigt, in der Kühlmittel aus dem Einlass 4 durch den Kanal 14 und den Bereich 22 in die Mischkammer 2 gelangen kann. Insbesondere reicht der Druck des durch den Einlass 3 einströmenden Kühlmittells aus um das Gas im Reservoir 32 so weit zu komprimieren, dass sich der Bereich 22 in den Kanal 14 hinein bewegt.

Gemäß der Figur 6, ist der Strom des Kühlmittels durch den Einlass 3 unterbrochen, wodurch sich das Gas im Reservoir 32 ausgedehnt und den Bereich 20 des Schiebers 7 in den Kanal 14 verschoben hat, wodurch auch der Strom aus dem Einlass 4 in die Mischkammer 2 unterbrochen ist.

Die oben beschriebenen Ausführungsbeispiele dienen vor allem dem besseren Verständnis der Erfindung und sollten nicht einschränkend verstanden werden. Der Schutzumfang der vorliegenden Patentanmeldung ergibt sich aus den Patentansprüchen.

Die Merkmale der beschriebenen Ausführungsbeispiele können miteinander kombiniert oder gegeneinander ausgetauscht werden. Ferner können die beschriebenen Merkmale durch den Fachmann an vorhandene Gegebenheiten oder vorliegende Anforderungen angepasst werden.

### Bezugszeichenliste

- 1: Vorrichtung / Düse
- 2: Mischkörper
- 3: zweiter Einlass
- 4: erster Einlass
- 5: Düsenrohr
- 6: Düsenauslass bzw. -kopf
- 7: Schieber
- 10: Vorrichtung / Düse
- 11: Vorrichtung / Düse
- 13: zweiter Kanal
- 14: erster Kanal
- 15: dritter Kanal
- 20: zweiter Bereich
- 22: erster Bereich
- 23: dritter Bereich
- 30: Federelement
- 31: Zugkraft-Federelement
- 32: Gasreservoir

## Patentansprüche

1. Eine Zweistoffkühl-Vorrichtung (1, 10, 11) zur Mehrstoffkühlung in einer Gießanlage, umfassend:
einen ersten Einlass (4) für ein erstes Kühlmittel, einen zweiten Einlass (3) für ein zweites Kühlmittel, eine Mischkammer (2) zum Vermischen der durch den ersten Einlass (4) und den zweiten Einlass (3) eingeleiteten Kühlmittel zu einem Kühlmittelgemisch, wobei der erste Einlass (4) über einen ersten Kanal (14) mit der Mischkammer (2) verbunden ist und der zweite Einlass (3) über einen zweiten Kanal (13) mit der Mischkammer (2) verbunden ist, **dadurch gekennzeichnet, dass** die Zweistoffkühl-Vorrichtung (1, 10, 11) einen sich quer durch den ersten Kanal (14) hindurch erstreckenden, federbelasteten Schieber (7) zum Einstellen des Kühlmittelstroms durch den ersten Kanal (14) umfasst, der in einer offenen Stellung die Zuführung des ersten Kühlmittels von dem ersten Einlass (4) in die Mischkammer (2) erlaubt und in einer geschlossenen Stellung die Zuführung des ersten Kühlmittels von dem ersten Einlass (4) in die Mischkammer (2) gegenüber der offenen Stellung zumindest reduziert oder vollständig verschließt, und dass eine Verstellung des Schiebers (7) in einem sich zumindest teilweise quer und beidseitig durch den ersten Kanal (14) erstreckenden dritten Kanal (15) zwischen der offenen Stellung und der geschlossenen Stellung in Abhängigkeit eines von dem zweiten Kühlmittel auf den Schieber (7) wirkenden Drucks erfolgt, indem der Schieber (7) entlang des dritten Kanals (15) beweglich und durch diesen geführt ist.

2. Zweistoffkühl-Vorrichtung gemäß Anspruch 1, wobei sich der Schieber (7) bei Einströmen des zweiten Kühlmittels durch den zweiten Einlass (3) in der offenen Stellung befindet und sich bei Ausbleiben des Einströmens des zweiten Kühlmittels durch den zweiten Einlass (3) in der geschlossenen Stellung befindet.

3. Zweistoffkühl-Vorrichtung gemäß Anspruch 1 oder 2, wobei das erste Kühlmittel Luft und das zweite Kühlmittel Wasser ist.

4. Vorrichtung gemäß einem der vorhergehenden Ansprüche, wobei die Zweistoffkühl-Vorrichtung eine Düse (1, 10, 11) ist.

5. Zweistoffkühl-Vorrichtung gemäß einem der Ansprüche 1 bis 4, wobei der dritte Kanal (15) in fluider Verbindung mit dem zweiten Kanal (13) steht, sodass ein Kühlmitteldruck des zweiten Kühlmittels unmittelbar auf den im dritten Kanal (15) beweglich geführten Schieber (7) wirkt.

6. Zweistoffkühl-Vorrichtung gemäß einem der Ansprüche 1 bis 5, wobei der Schieber (7) zumindest abschnittsweise entlang einer Innenwandung des dritten Kanals (15) abgedichtet geführt ist.

7. Zweistoffkühl-Vorrichtung gemäß einem der Ansprüche 1 bis 6, wobei der Schieber (7) einen ersten Bereich (22) aufweist, welcher in der offenen Stellung einen Durchfluss durch den ersten Kanal (14) von dem ersten Einlass (4) in die Mischkammer (2) erlaubt, und einen zweiten Bereich (20), welcher in der geschlossenen Stellung diesen Durchfluss gegenüber der offenen Stellung reduziert oder vollständig blockiert.

8. Zweistoffkühl-Vorrichtung gemäß Anspruch 7, wobei der Schieber (7) einen dritten Bereich (21) aufweist und der erste Bereich (22) zwischen dem zweiten (20) und dem dritten Bereich (21) angeordnet ist und wobei sowohl der zweite Bereich (20) als auch der dritte Bereich (21) derart komplementär zu einem inneren Querschnitt des dritten Kanals (15) ausgebildet sind, sodass der zweite Bereich (20) und der dritte Bereich (21) den dritten Kanal (15) gegenüber Kühlmittelfluss abdichten.

9. Zweistoffkühl-Vorrichtung gemäß Anspruch 8, wobei der erste Bereich (22) einen gegenüber dem zweiten Bereich (20) und dem dritten Bereich (21) geringeren Querschnitt aufweist und/oder zumindest eine durchgehende Öffnungen oder Rille zum Leiten von Kühlmittel durch den ersten Bereich (22) des Schiebers (7) aufweist.

10. Zweistoffkühl-Vorrichtung gemäß einem der Ansprüche 7 bis 9, wobei der zweite Bereich (20) eine Öffnung zum Leiten von Kühlmittel durch den zweiten Bereich des Schiebers (7) aufweist, zum Ermöglichen eines Restkühlmittelstroms des ersten Kühlmittels durch den Schieber (7) bei geschlossener Stellung des Schiebers (7).

11. Zweistoffkühl-Vorrichtung gemäß einem der vorhergehenden Ansprüche, wobei der Schieber (7) eine längliche Form mit zwei gegenüberliegenden Enden aufweist und entlang seiner Längsachse beweglich angeordnet ist und das zweite Kühlmittel mit einem ersten der beiden Enden in Verbindung steht, sodass der Druck des zweiten Kühlmittels auf dieses Ende wirkt.

12. Zweistoffkühl-Vorrichtung gemäß Anspruch 11,
wobei das zweite der beiden gegenüberliegenden Enden über ein Federelement (30) entgegen dem auf das erste der beiden Enden wirkenden Druck des zweiten Kühlmittels vorgespannt ist, und/oder
wobei das erste der beiden Enden über ein Zugkraft-Federelement (31) entgegen dem auf das erste der beiden Enden wirkenden Druck des zweiten Kühlmittels vorgespannt ist, und/oder
wobei das zweite der beiden gegenüberliegenden Enden mittels eines Gasreservoirs (32) entgegen dem auf das erste der beiden Enden wirkenden Druck des zweiten Kühlmittels vorgespannt ist.

13. Zweistoffkühl-Vorrichtung gemäß einem der vorhergehenden Ansprüche, ferner umfassend einen Düsenauslass (6) und ein Düsenrohr (5), welches den Düsenauslass (6) mit der Mischkammer (2) zur Leitung des Kühlmittelgemischs zum Düsenauslass (6) verbindet.

14. Anlage zur Sekundärkühlung in einer Gießanlage, umfassend mindestens eine Zweistoffkühl-Vorrichtung gemäß einem der Ansprüche 1-13.

15. Verfahren zur Sekundärkühlung in einer Gießanlage mittels der Zweistoffkühl-Vorrichtung gemäß einem der Ansprüche 1-13 oder der Anlage gemäß Anspruch 14, umfassend die folgenden Schritte:
Bereitstellen eines Stroms eines ersten Kühlmittels;
Bereitstellen eines Stroms eines zweiten Kühlmittels;
Führen der beiden Ströme in einen Mischbereich (2) zum Durchmischen beider Kühlmittel zu einem Kühlmittelgemisch;
Verströmen des Kühlmittelgemischs auf die Oberfläche eines in der Gießanlage gegossenen Metallstrangs; und
Beaufschlagen eines federbelasteten Schiebers (7) mit dem zweiten Kühlmittel zur Einstellung des Stroms des ersten Kühlmittels durch einen Druck des zweiten Kühlmittels, wobei, bei sinkendem Druck des zweiten Kühlmittels, der Schieber (7) den Strom des ersten Kühlmittels in den Mischbereich (2) reduziert, vorzugsweise vollständig blockiert.

16. Verfahren gemäß Anspruch 15, wobei der Druck des Stroms des zweiten Kühlmittels unmittelbar eine Kraft auf den Schieber (7) ausübt und diese Kraft den Schieber (7) entgegen der Federbelastung in eine offene Stellung drängt, um den Strom des ersten Kühlmittels in den Mischbereich (2) zu ermöglichen und wobei sich der Schieber (7) bei Ausbleiben des Drucks des Stroms des zweiten Kühlmittels durch die Federbelastung in eine geschlossene Stellung bewegt und somit die Zufuhr des Stroms des ersten Kühlmittels in den Mischbereich (2) unterbunden wird.

## Claims

1. A two-component cooling device (1, 10, 11) for multi-component cooling in a casting plant, comprising:
a first inlet (4) for a first cooling medium, a second inlet (3) for a second cooling medium, a mixing chamber (2) for mixing the cooling media introduced through the first inlet (4) and
the second inlet (3) to form a cooling medium mixture, wherein the first inlet (4) is connected with the mixing chamber (2) by way of a first channel (14) and the second inlet (3) is connected with the mixing chamber (2) by way of a second channel (13),
**characterised in that** the two-component cooling device (1, 10, 11) comprises a spring-loaded slide (7), which extends transversely through the first channel (14), for setting the cooling medium flow through the first channel (14), which slide in an open setting allows feed of the first cooling medium from the first inlet (4) to the mixing chamber (2) and in a closed setting at least reduces by comparison with the open setting, or completely terminates, the feed of the first cooling medium from the first inlet (4) to the mixing chamber (2), and that an adjustment of the slide (7) in a third channel (15), which extends at least in part transversely and on both sides through the first channel (14), between the open setting and the closed setting takes place in dependence on a pressure exerted by the two-component cooling medium on the slide (7) **in that** the slide (7) is movable along the third channel (15) and guided by this.

2. Two-component cooling device according to claim 1, wherein the slide (7) when there is inflow of the second cooling medium through the second inlet (3) is disposed in the open setting and when there is an absence of inflow of the second cooling medium through the second inlet (3) is disposed in the closed setting.

3. Two-component cooling device according to claim 1 or 2, wherein the first cooling medium is air and the second cooling medium is water.

4. Device according to any one of the preceding claims, wherein the two-component cooling device is a nozzle (1, 10, 11).

5. Two-component cooling device according to any one of claims 1 to 4, wherein the third channel (15) is in fluid connection with the second channel (13) so that a cooling medium pressure of the second cooling medium acts directly on the slide (7), which is movably guided in the third channel (15).

6. Two-component cooling device according to any one of claims 1 to 5, wherein the slide (7) is sealably guided at least regionally along an inner wall of the third channel (15).

7. Two-component cooling device according to any one of claims 1 to 6, wherein the slide (7) has a first region (22), which in the open setting allows a throughflow through the first channel (14) from the first inlet (4) to the mixing chamber (2), and a second region (20), which in the closed setting reduces or completely blocks this throughflow by comparison with the open setting.

8. Two-component cooling device according to claim 7, wherein the slide (7) has a third region (21) and the first region (22) is arranged between the second region (20) and the third region (21) and wherein both the second region (20) and the third region (21) are formed to be complementary with an internal cross-section of the third channel (15) so that the second region (20) and the third region (21) seal off the third channel (15) relative to cooling medium flow.

9. Two-component cooling device according to claim 8, wherein the first region (22) has a smaller cross-section by comparison with the second region (20) and the third region (21) and/or has at least one continuous opening or groove for conducting cooling medium through the first region (22) of the slide (7).

10. Two-component cooling device according to any one of claims 7 to 9, wherein the second region (20) has an opening for conducting cooling medium through the second region of the slide (7) so as to make possible a residual cooling medium flow of the first cooling medium through the slide (7) in the closed setting of the slide (7).

11. Two-component cooling device according to any one of the preceding claims, wherein the slide (7) has an elongate form with two opposite ends and is arranged to be movable along its longitudinal axis and the second cooling medium is connected with a first one of the two ends so that the pressure of the second cooling medium acts on this end.

12. Two-component cooling device according to claim 11, wherein the second of the two opposite ends is biased by way of a spring element (30) against the pressure, which acts on the first one of the two ends, of the second cooling medium and/or wherein the first one of the two ends is biased by way of a tension-force spring element (31) against the pressure, which acts on the first one of the two ends, of the second cooling medium and/or wherein the second one of the two opposite ends is biased by means of a gas reservoir (32) against the pressure, which acts on the first one of the two ends, of the second cooling medium.

13. Two-component cooling device according to any one of the preceding claims, further comprising a nozzle outlet (6) and a nozzle pipe (5) which connects the nozzle outlet (6) with the mixing chamber (2) for the conduction of cooling medium mixture to the nozzle outlet (6).

14. Installation for secondary cooling in a casting plant, comprising at least one two-component cooling device according to any one of claims 1 to 13.

15. Method for secondary cooling in a casting plant by means of the two-component cooling device according to any one of claims 1 to 13 or the installation according to claim 14, comprising the following steps:
providing a flow of a first cooling medium;
providing a flow of a second cooling medium;
conducting the two flows into a mixing region (2) for thorough mixing of the two cooling media to form a cooling medium mixture;
causing the cooling medium mixture to flow onto the surface of a metal strip cast in the casting plant; and
loading a spring-loaded slide (7) by the second cooling medium to set the flow of the first cooling medium by a pressure of the second cooling medium, wherein in the case of reducing pressure of the second cooling medium the slide (7) reduces, preferably completely blocks, the flow of the first cooling medium into the mixing region (2).

16. Method according to claim 15, wherein the pressure of the flow of the second cooling medium directly exerts a force on the slide (7) and this force urges the slide (7) into an open setting against the spring loading so as to make possible flow of the first cooling medium into the mixing region (2) and wherein the slide (7) in the absence of pressure of the flow of the second cooling medium moves by the spring loading into a closed setting and thus the feed of the flow of the first cooling medium into the mixing region (2) is precluded.

## Revendications

1. Dispositif de refroidissement binaire (1, 10, 11) pour le refroidissement mixte dans une installation de coulée continue, comprenant: une première entrée (4) pour un premier réfrigérant, une deuxième entrée (3) pour un deuxième réfrigérant, une chambre de mélange (2) pour le mélange des réfrigérants introduits par la première entrée (4) et par la deuxième entrée (3) pour obtenir un mélange de réfrigérants, dans lequel la première entrée (4) est reliée à la chambre de mélange (2) via un premier canal (14) et la deuxième entrée (3) est reliée à la chambre de mélange (2) via un deuxième canal (13), **caractérisé en ce que** le dispositif de refroidissement binaire (1,10, 11) comprend un coulisseau (7) chargé par ressort s'étendant en direction transversale à travers tout le premier canal (14) pour le réglage du courant de réfrigérant à travers le premier canal (14) qui, dans une position ouverte, permet l'alimentation du premier réfrigérant à partir de la première entrée (4) dans la chambre de mélange (2) et qui, dans une position fermée, au minimum réduit, par rapport à la position ouverte, ou obture complètement l'alimentation du premier réfrigérant à partir de la première entrée (4) dans la chambre de mélange (2), et **en ce qu'**un déplacement du coulisseau (7) dans un troisième canal (15) s'étendant au moins en partie en direction transversale et en direction bilatérale à travers le premier canal (14), entre la position ouverte et la position fermée a lieu en fonction d'une pression qu'exerce le deuxième réfrigérant sur le coulisseau (7), du fait que le coulisseau (7) est mobile le long du troisième canal (15) et est guidé à travers ce dernier.

2. Dispositif de refroidissement binaire selon la revendication 1, dans lequel le coulisseau (7), lors de l'admission du deuxième réfrigérant à travers la deuxième entrée (3), se trouve dans la position ouverte, et en l'absence d'admission du deuxième réfrigérant à travers la deuxième entrée (3), se trouve dans la position fermée.

3. Dispositif de refroidissement binaire selon la revendication 1 ou 2, dans lequel le premier réfrigérant est de l'air et le deuxième réfrigérant est de l'eau.

4. Dispositif selon l'une quelconque des revendications précédentes, dans lequel le dispositif de refroidissement binaire est une buse (1, 10, 11).

5. Dispositif de refroidissement binaire selon l'une quelconque des revendications 1 à 4, dans lequel le troisième canal (15) est mis en liaison par fluide avec le deuxième canal (13), si bien qu'une pression du deuxième réfrigérant agit directement sur le coulisseau (7) guidé en mobilité dans le troisième canal (15).

6. Dispositif de refroidissement binaire selon l'une quelconque des revendications 1 à 5, dans lequel le coulisseau (7) est guidé en étanchéité au moins par sections le long d'une paroi interne du troisième canal (15).

7. Dispositif de refroidissement binaire selon l'une quelconque des revendications 1 à 6, dans lequel le coulisseau (7) présente une première zone (22), qui permet, dans la position ouverte, un passage à travers le premier canal (14) depuis la première entrée (4) jusque dans la chambre de mélange (2), et une deuxième zone (20) qui, dans la position fermée, réduit, par rapport à la position ouverte, ou bloque complètement ce passage.

8. Dispositif de refroidissement binaire selon la revendication 7, dans lequel le coulisseau (7) présente une troisième zone (21) et la première zone (22) est disposée entre la deuxième zone (20) et la troisième zone (21), et dans lequel aussi bien la deuxième zone (20) que la troisième zone (21) sont réalisées de manière complémentaire par rapport à une section transversale interne du troisième canal (15), de telle sorte que la deuxième zone (20) et la troisième zone (21) obturent le troisième canal (15) par rapport au flux de réfrigérant.

9. Dispositif de refroidissement binaire selon la revendication 8, dans lequel la première zone (22) présente une section transversale inférieure à celles de la deuxième zone (20) et de la troisième zone (21) et/ou au moins une ouverture ou une rainure continue pour le guidage du réfrigérant à travers la première zone (22) du coulisseau (7).

10. Dispositif de refroidissement binaire selon l'une quelconque des revendications 7 à 9, dans lequel la deuxième zone (20) présente une ouverture pour le guidage du réfrigérant à travers la deuxième zone du coulisseau (7), pour permettre un courant de premier réfrigérant résiduel à travers le coulisseau (7) dans la position fermée du coulisseau (7).

11. Dispositif de refroidissement binaire selon l'une quelconque des revendications précédentes, dans lequel le coulisseau (7) présente une forme oblongue comportant deux extrémités opposées et est disposé en mobilité le long de son axe longitudinal, et le deuxième réfrigérant est mis en liaison avec une première des deux extrémités, si bien que la pression du deuxième réfrigérant s'exerce sur cette extrémité.

12. Dispositif de refroidissement binaire selon la revendication 11, dans lequel la deuxième des deux extrémités opposées est mise en état de précontrainte via un élément faisant ressort (30) à l'encontre de la pression du deuxième réfrigérant s'exerçant sur la première des deux extrémités et/ou dans lequel la première des deux extrémités est mise en état de précontrainte via un élément faisant ressort (31) exerçant une force de traction à l'encontre de la pression du deuxième réfrigérant s'exerçant sur la première des deux extrémités et/ou dans lequel la deuxième des deux extrémités opposées est mise en état de précontrainte au moyen d'un réservoir pour le gaz (32) à l'encontre de la pression du deuxième réfrigérant s'exerçant sur la première des deux extrémités.

13. Dispositif de refroidissement binaire selon l'une quelconque des revendications précédentes, comprenant en outre une sortie de buse (6) et un tube de buse (5) qui relie la sortie de buse (6) à la chambre de mélange (2) pour le guidage du mélange de réfrigérants en direction de la sortie de buse (6).

14. Installation pour le refroidissement secondaire dans une installation de coulée continue comprenant au moins un dispositif de refroidissement binaire selon l'une quelconque des revendications 1 à 13.

15. Procédé pour le refroidissement secondaire dans une installation de coulée continue au moyen du dispositif de refroidissement binaire selon l'une quelconque des revendications 1 à 13 ou de l'installation selon la revendication 14, comprenant les étapes suivantes consistant à :
procurer un courant d'un premier réfrigérant ;
procurer un courant d'un deuxième réfrigérant ;
guider les deux courants dans une zone de mélange (2) pour le mélange intime des deux réfrigérants afin d'obtenir un mélange de réfrigérants ;
répandre le mélange de réfrigérants sur la surface d'une barre métallique coulée dans l'installation de coulée continue ; et
solliciter un coulisseau (7) chargé par ressort, avec le deuxième réfrigérant pour guider le courant du premier réfrigérant via une pression du deuxième réfrigérant, dans lequel, lorsque la pression du deuxième réfrigérant diminue, le coulisseau (7) réduit, de préférence bloque complètement le courant du premier réfrigérant dans la zone de mélange (2).

16. Procédé selon la revendication 15, dans lequel la pression du courant du deuxième réfrigérant exerce directement une force sur le coulisseau (7) et cette force pousse le coulisseau (7) dans une position ouverte à l'encontre de la sollicitation par ressort pour permettre le courant du premier réfrigérant dans la zone de mélange (2), et dans lequel, en l'absence de la pression du courant du deuxième réfrigérant, le coulisseau (7) passe, via la sollicitation par ressort, dans une position fermée et empêche par conséquent l'admission du courant du premier réfrigérant dans la zone de mélange (2).
